# EUROPÄISCHE PATENTANMELDUNG

(11) **EP 0 745 825 A2**
(43) Veröffentlichungstag der Anmeldung: **04.12.1996**
(21) Anmeldenummer: 96106880.6
(22) Anmeldetag: 02.05.1996
(51) Int. Cl.: F28F 25/08

(54) **Rieseleinbau-Element**

(30) Priorität: 31.05.1995 DE 19519924
(71) Anmelder: BDAG Balcke-Dürr Aktiengesellschaft, D-40882 Ratingen (DE); RAINER RICHTER GmbH, 56472 Hof (DE)
(72) Erfinder: Biller, Hans, 04318 Leipzig (DE); Hellmold, Jürgen, 04347 Leipzig (DE); Richter, Rainer, 56472 Hof (DE); Liebscher, Michael, 01309 Dresden (DE)
(74) Vertreter: Stenger, Watzke & Ring Patentanwälte

(57) **Zusammenfassung**

Die Erfindung betrifft ein Rieseleinbau-Element für Einrichtungen zum Stoff- und/oder Wärmeaustausch zwischen Gasen und Flüssigkeiten, die aus einer Mehrzahl von profilierten Flächenelementen 1 bestehen, die mit Wellungen und/oder Faltungen zur Bildung von im Gegenstrom von dem jeweiligen Gas und der jeweiligen Flüssigkeit durchströmten Kanälen 2 versehen sind. Die unter einem vorgegebenen Winkel zur Hauptströmungsrichtung verlaufenden Kanäle 2 weisen über die Höhe des gesamten Rieseleinbaues mindestens zwei Richtungswechsel auf. Jeder Kanal 2 ist mit einem in etwa trapezförmigen Querschnitt mit schmalen Flächenstreifen 2b zwischen den vorzugsweise unter einen Winkel von 90° zueinander verlaufenden Kanalflanken 2a ausgeführt, wobei die Flächenelemente 1 im Bereich des Gaseintritts und im Bereich des Flüssigkeitseintritts mit einem parallel zur Gas- bzw. Flüssigkeitsströmungsrichtung verlaufenden Kanalabschnitt 2c, 2g versehen sind. Um den Austauschwirkungsgrad zu verbessern, ist die gesamte Oberfläche der Kanäle 2, mit Ausnahme der Kanalabschnitte 2c und 2g mit einer in etwa quer zur Strömungsrichtung der Flüssigkeit verlaufenden Profilierung 3 versehen, deren Profiltiefe t mindestens das Zweifache der Flüssigkeitsfilmdicke beträgt.

## Beschreibung

Die Erfindung betrifft ein Rieseleinbau-Element für Einrichtungen zum Stoff- und/oder Wärmeaustausch zwischen Gasen und Flüssigkeiten, insbesondere für Kühltürme, bestehend aus einer Mehrzahl von profilierten Flächenelementen, die mit Wellungen und/oder Faltungen zur Bildung von im Gegenstrom von dem jeweiligen Gas und der jeweiligen Flüssigkeit durchströmten Kanälen versehen sind, welche unter einem vorgegebenen Winkel zur Hauptströmungsrichtung verlaufen, wobei der schräge Kanalverlauf über die Höhe des gesamten Rieseleinbaues mindestens zwei Richtungswechsel aufweist, die Flächenelemente im Bereich des Gaseintritts mit einem parallel zur Gasströmungsrichtung verlaufenden Kanalabschnitt und im Bereich des Flüssigkeitseintritts mit einem parallel zur Flüssigkeitsströmungsrichtung verlaufenden Kanalabschnitt versehen sind und jeder Kanal mit einem in etwa trapezförmigen Querschnitt mit schmalen Flächenstreifen zwischen den vorzugsweise unter einem Winkel von 90° zueinander verlaufenden Kanalflanken ausgeführt ist.

Derartige Rieseleinbau-Elemente sind beispielsweise aus der DE-OS 41 27 245 bekannt. Diese profilierten Flächenelemente werden aus Folien, Platten oder Matten hergestellt. Die identisch ausgebildeten Flächenelemente werden derart nebeneinander angeordnet, daß sich die schräg zur Hauptströmungsrichtung der Flüssigkeit und des Gases verlaufenden, durch Wellungen und/oder Faltungen erzeugten Kanäle jeweils benachbarter Flächenelemente kreuzen. Hierdurch ergeben sich zwischen benachbarten Flächenelementen Berührungspunkte, an denen die Flächenelemente miteinander zu einem Rieseleinbau-Element verbunden sind. Von derartigen Rieseleinbau-Elementen werden üblicherweise mehrere übereinander angeordnet, wobei bei den bekannten Rieseleinbau-Elementen die übereinander liegenden Elemente derart angeordnet werden, daß sich über die Höhe des gesamten Rieseleinbaues mindestens zwei Richtungswechsel hinsichtlich des Verlaufes der einzelnen Kanäle ergeben. Zur Erhöhung der Verweildauer der Flüssigkeit auf der Oberfläche der Flächenelemente sind bei den aus der DE-OS 41 27 245 bekannten Rieseleinbau-Elementen die Flanken der trapezförmigen Kanäle mit einer wellenartigen Feinprofilierung versehen. Zwar ermöglicht diese Feinprofilierung eine gewisse Verringerung der Abströmgeschwindigkeit, jedoch hat sich in der Praxis herausgestellt, daß die wellenförmige Feinprofilierung leicht von dem Flüssigkeitsfilm überspült wird, so daß lediglich eine untere Flüssigkeitsschicht länger auf dem Flächenelement verweilt, jedoch gerade die am Wärmeaustausch hauptsächlich beteiligte oberer Flüssigkeitsschicht mit nahezu unverminderter Geschwindigkeit durch die Kanäle abfließt.

Der Erfindung liegt die **Aufgabe** zugrunde, ein Rieseleinbau-Element der voranstehend beschriebenen Art hinsichtlich des Stoff- und/oder Wärmeaustauschs sowie bezüglich der hydraulischen und aerodynamischen Verhältnisse zu verbessern, und zwar unter Beibehaltung der preiswerten Herstellbarkeit und einfachen Montage derartiger Rieseleinbau-Elemente.

Die **Lösung** dieser Aufgabenstellung durch die Erfindung ist dadurch gekennzeichnet, daß mit Ausnahme der Kanalabschnitte im Eintrittsbereich der Flüssigkeit bzw. des Gases die gesamte Oberfläche der Kanäle einschließlich der schmalen Flächenstreifen mit einer etwa quer zur Strömungsrichtung der Flüssigkeit verlaufenden Profilierung versehen ist, deren Profiltiefe mindestens das Zweifache der Flüssigkeitsfilmdicke beträgt.

Durch die Ausbildung der Profiltiefe in Abhängigkeit von der Flüssigkeitsfilmdicke wird gewährleistet, daß die durch die Kanäle fließende Flüssigkeit dem Profil der Profilierung folgen muß und nicht oberflächlich über diese Profilierung hinweg abfließen kann. Neben einer Verringerung der Ablaufgeschwindigkeit und einer längeren Verweildauer der Flüssigkeit auf der Oberfläche der Flächenelemente wird durch diese erfindungsgemäße Profilierung eine turbulente Umlenkung des Wasserfilms erzeugt, welche den Wärme- und Stoffaustausch begünstigt. Darüber hinaus hat es sich als vorteilhaft erwiesen, daß nicht nur die Flanken der Kanäle, sondern auch die schmalen Flächenstreifen mit der Profilierung versehen sind, um eine optimale Querverteilung des Flüssigkeitsfilms über die Flanken hinaus zu ermöglichen und eine Bachbildung in den jeweiligen Vertiefungen eines Flächenelementes zu vermeiden. Die Eintrittsbereiche der Flüssigkeit und des Gases sind unprofiliert ausgebildet, um einerseits einen möglichst geringen Eintrittsdruckverlust zu gewährleisten und andererseits durch die glatten, senkrechten Eintrittsbereiche einen erosiven Angriff auf die Profilierung durch das Auftreffen der versprühten Flüssigkeit zu vermeiden.

Gemäß einem weiteren Merkmal der Erfindung beträgt die Breite der einzelnen Profilabschnitte der Profilierung mindestens das Zehnfache der Flüssigkeitsfilmdicke. Entlang dieser im Vergleich zur Profiltiefe recht breiten Profilabschnitte vergleichmäßigt sich der Flüssigkeitsfilm wieder, bevor er am nächsten Übergang zu einem Profiltal bzw. einem Profilberg erneut umgelenkt wird.

Bei einer zweckmäßigen Weiterbildung des erfindungsgemäßen Rieseleinbau-Elementes ist die Profilierung mit scharfkantigen Übergängen ausgebildet. Hierdurch werden am Übergang von einem Profilberg zu einem Profiltal bzw. von einem Profiltal zu einem Profilberg Turbulenzen im Flüssigkeitsfilm erzeugt, die den Wärme- und Stoffaustausch begünstigen.

Bei einer bevorzugten Ausführungsform der Erfindung sind im Bereich der schmalen Flächenstreifen definierte Anlageflächen zur Kontaktierung benachbarter Flächenelemente ausgebildet. Durch die im Querschnitt trapezförmige Ausgestaltung der Kanäle ergeben sich bei den einander kreuzenden Kanalabschnitten nicht nur punktförmige Berührungsstellen, sondern Berührungsflächen im Bereich der schmalen Flächenstreifen, so daß einzelne Flächenelemente in diesem Bereich haltbar miteinander verklebt oder verschweißt werden können.

Gemäß einem weiteren Merkmal der Erfindung sind die Flächenelemente aus tiefgezogenen Kunststoffolien mit einer Folienstärke von 0,3 bis 3mm hergestellt. Solchermaßen hergestellte Rieseleinbau-Elemente haben den Vorteil, daß sie einerseits einfach und kostengünstig hergestellt werden können und andererseits auch großvolumige Rieseleinbau-Elemente ein im Vergleich zur Wärmeaustauschfläche nur geringes Gewicht aufweisen.

Gemäß einer bevorzugten Ausführungsform der Erfindung hat es sich als besonders zweckmäßig erwiesen, die Kanäle in einem Winkel von 15 bis 30° zur Senkrechten bzw. zur Hauptströmungsrichtung anzuordnen.

Weitere Einzelheiten und Vorteile ergeben sich aus der nachfolgenden Beschreibung der zugehörigen Zeichnungen, in denen ein Ausführungsbeispiel eines erfindungsgemäßen Rieseleinbau-Elementes schematisch dargestellt ist. In den Zeichnungen zeigen:
- Fig. 1: eine Seitenansicht eines Rieseleinbau-Elementes mit einem profilierten Flächenelement;
- Fig. 2: eine Draufsicht auf zwei Flächenelemente gemäß Fig. 1;
- Fig. 3: eine vergrößerte Teilansicht des profilierten Flächenelementes gemäß Fig. 1;
- Fig. 4: eine Draufsicht auf das Flächenelement gemäß Fig. 3 und
- Fig. 5: einen Schnitt gemäß der Schnittlinie V-V in Fig. 4.

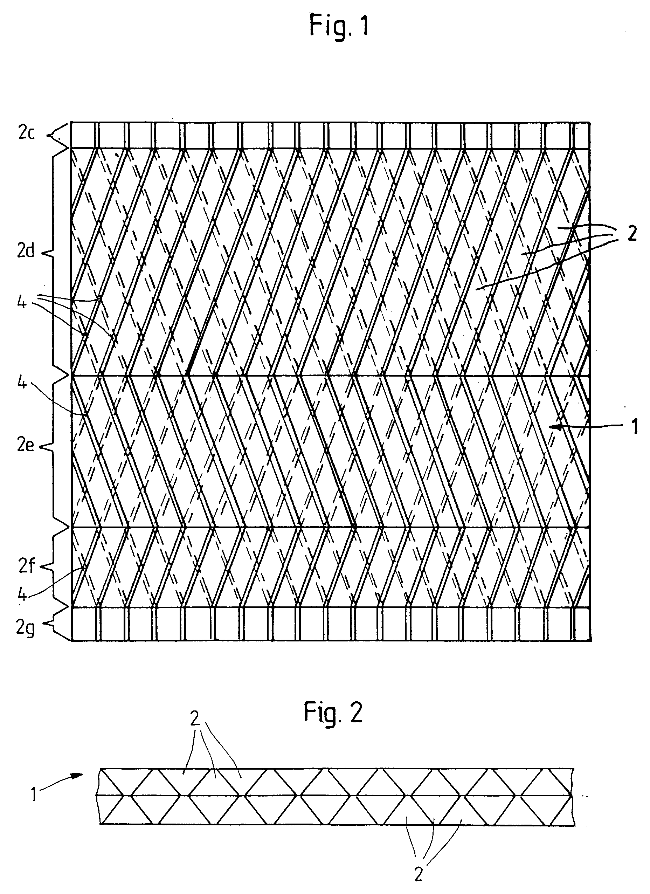

Die in Fig. 1 dargestellte Seitenansicht eines Rieseleinbau-Elementes stellt zugleich die Ansicht eines profilierten Flächenelementes 1 dar, das beispielsweise aus einer Kunststoffolie hergestellt wurde. Eine Mehrzahl derartiger Flächenelemente 1 bildet zusammen ein Rieseleinbau-Element. Eine Vielzahl derartiger Rieseleinbau-Elemente bilden wiederum den Rieseleinbau beispielsweise in einem Kühlturm, wobei mehrere Rieseleinbau-Elemente nicht nur nebeneinander, sondern auch übereinander angeordnet sind.

Die zu kühlende Flüssigkeit, im Falle eines Kühlturms also das Rückkühlwasser, wird von oben her auf die Rieseleinbau-Elemente mittels einer auf der Zeichnung nicht dargestellten Verteileinrichtung aufgegeben. Diese Flüssigkeit gelangt hierbei von oben her in durch die Profilierung der Flächenelemente 1 gebildete Kanäle 2, die von unten her mit Gas, im Falle eines Kühlturms also mit Kühlluft im Gegenstrom zur Flüssigkeit durchströmt werden.

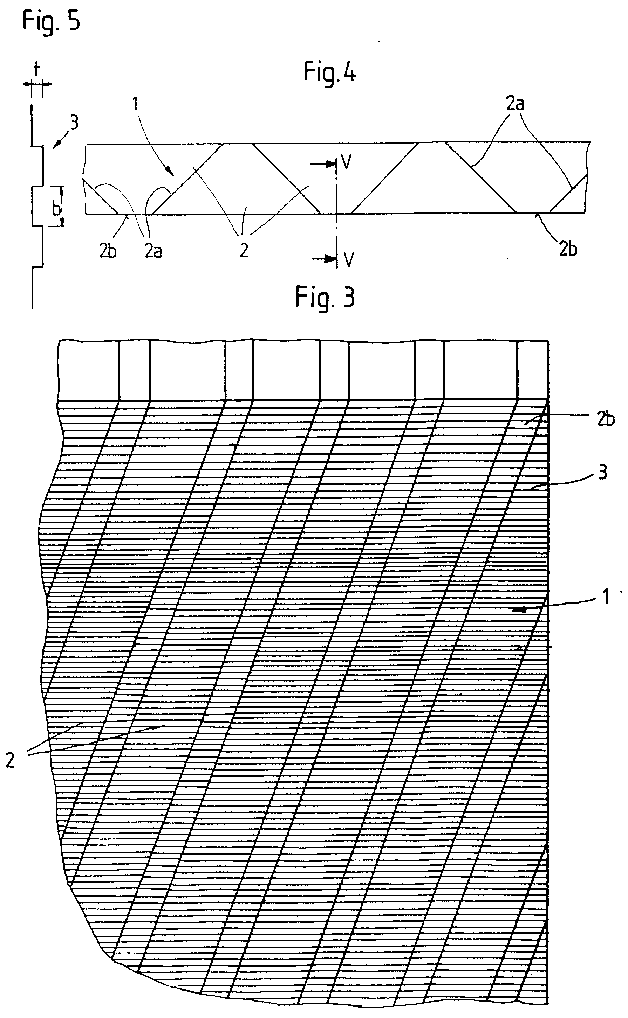

Die in den Abbildungen dargestellten Flächenelemente 1 sind derart profiliert, daR sich im Querschnitt trapezförmige Kanäle 2 ergeben, deren Kanalquerschnitt am besten in den Abbildungen Fig. 2 und 4 zu erkennen ist. Der Verlauf der Kanäle 2 über die Höhe des Flächenelementes 1 ist am besten der Fig. 1 zu entnehmen.

Wie aus der vergrößerten Teilansicht gemäß Fig. 3 ersichtlich, ist die gesamte, aus Kanalflanken 2a und schmalen Flächenstreifen 2b bestehende Oberfläche der Kanäle 2 mit einer Profilierung 3 versehen, die etwa quer zur Richtung des Kanalverlaufs ausgerichtet ist. Auf die Ausbildung der Profilierung 3 wird nachfolgend bei der Beschreibung der Figuren 3 und 5 näher eingegangen.

Fig. 1 zeigt, daß jeder Kanal 2 in Strömungsrichtung der zu kühlenden, von ben her eintretenden Flüssigkeit einen parallel zur Flüssigkeitsströmungsrichtung verlaufenden und wie aus Fig. 3 ersichtlich nicht profilierten Kanalabschnitt 2c aufweist, an den sich Kanalabschnitte 2d, 2e und 2f anschließen, die unter einem spitzen Winkel, vorzugsweise von 15 bis 30° zur Hauptströmungsrichtung von Flüssigkeit und Gas verlaufen und mindestens zwei Richtungswechsel aufweisen. Jeder dieser Kanäle 2 endet schließlich an der Unterseite des Flächenelements 1 wiederum in einem unprofilierten Kanalabschnitt 2g, der parallel zur Hauptströmungsrichtung und damit parallel zum einströmenden Gas ausgerichtet ist. Die Kanalabschnitte 2d, 2e und 2f können, wie aus der Darstellung ersichtlich, unterschiedlich lang ausgebildet sein.

Die zu kühlende Flüssigkeit, die von oben her den aus einer Mehrzahl von Flächenelementen 1 gebildeten Rieseleinbau-Elementen aufgegeben wird, unterliegt in den parallel zur Hauptströmungsrichtung ausgerichteten unprofilierten Kanalabschnitten 2a einer gewissen Ausrichtung, die insbesondere bei seitlich orientierten Sprühdüsensystemen zu einer Vergleichmäßigung führt. Außerdem wird eine Erosion der Flächenelemente 1 bzw. der Profilierung 3 durch die auf die Flächenelemente 1 auftreffende Flüssigkeit infolge der parallel zur Flüssigkeitströmungsrichtung verlaufenden Ausrichtung sowie der Nichtprofilierung der Kanalabschnitte 2c wesentlich vermindert.

Aus den Kanalabschnitten 2c gelangt die Flüssigkeit anschließend in den schrägverlaufenden Kanalabschnitt 2d. Wegen des schrägen Kanalverlaufs trifft die Flüssigkeit nur auf eine Kanalflanke 2a des trapezförmig ausgebildeten Kanals 2 auf, und zwar auf die der Flüssigkeitsströmung zugewandte Flanke 2a. Um eine optimale Querverteilung der Flüssigkeit zu erreichen, weist die gesamte Oberfläche der Kanäle 2 die aus Fig. 3 und 5 ersichtliche Profilierung 3 auf. Durch die Ausbildung der Profilierung 3 entlang der Kanalflanken 2a und der schmalen Flächenstreifen 2b wird eine optimale Querverteilung des Flüssigkeitsfilms erreicht und verhindert, daß sich eine "Bachbildung" entlang der tiefliegenden schmalen Flächenstreifen 2b ergibt, die eine erhöhte Abfließgeschwindigkeit der Flüssigkeit und somit einen verringerten Wärme- und Stoffaustausch zur Folge hätte.

In der Praxis hat sich herausgestellt, daß der Wärme- und/oder Stoffaustausch zwischen Flüssigkeit und Gas neben dem in jedem Flächenelement 1 wirksam werdenden mehrfachen Richtungswechsel der schrägverlaufenden Kanalabschnitte 2d, 2e und 2f und die hierdurch auftretenden Turbulenzen sehr stark dadurch erhöht werden kann, daß insbesondere die Profiltiefe der Profilierung 3 an die Flüssigkeitsfilmdicke angepaßt ist. Wie aus Fig,. 5 ersichtlich, beträgt die Profiltiefe t mindestens das Zweifache der Flüssigkeitsfilmdicke. Durch diese Ausgestaltung der Profiltiefe t in Abhängigkeit von der Flüssigkeitsfilmdicke wird erreicht, daß die Profilierung 3 nicht einfach von dem herabströmenden Wasserfilm überspült wird. Die Profilbreite b, die im Ausführungsbeispiel wenigstens das Zehnfache der Flüssigkeitsfilmdicke beträgt, sorgt für eine erneute Beruhigung der Flüssigkeitsströmung, bevor diese beim Übergang zum nächsten Profiltal bzw. Profilberg erneut turbulent umgelenkt wird. Zur Erhöhung des Stoff- und/oder Wärmeaustausches ist die Profilierung vorzugsweise mit scharfkantigen, Turbulenzen erzeugenden Übergängen ausgebildet.

Die in Fig. 1 erkennbare Ausrichtung der an der Unterseite der Flächenelemente 1 ausgebildeten unprofilierten Kanalabschnitte 2g parallel zur Hauptströmungsrichtung verringert die Stoßverluste beim Eintritt des Gases in die durch eine Mehrzahl von Flächenelementen 1 gebildeten Rieseleinbau-Elemente. Zusammen mit der hierdurch bewirkten gezielten Gaseinlenkung in die Rieseleinbau-Elemente ergeben sich somit geringstmögliche Stoß- und Umlenkverluste. Darüber hinaus wird durch die Nichtprofilierung dieser Kanalabschnitte 2g eine Erosion der Profilierung 3 verhindert.

Der Verlauf der Kanalabschnitte 2c und 2g parallel zur Hauptströmungsrichtung von Flüssigkeit und Gas hat aber auch herstellungstechnische Vorteile. Es ergeben sich nämlich im Bereich dieser Kanalabschnitte 2c und 2g definierte Anlageflächen 4 zur Kontaktierung benachbarter Flächenelemente 1. Aufgrund der im Querschnitt trapezförmigen Ausgestaltung der Kanäle 2 mit schmalen Flächenstreifen 2b zwischen den vorzugsweise unter einem Winkel von 90° zueinander verlaufenden Kanalflanken 2a ergeben sich auch im Bereich sich kreuzender Flächenelemente 1 definierte Anlageflächen 4, in deren Bereich die sich kreuzenden Flächenelemente 1 miteinander verklebt oder verschweißt werden können. Die Verbindung hat sich in der Praxis als derart sicher und stabil herausgestellt, daß bei gesteigerter Festigkeit und Steifigkeit der Rieseleinbau-Elemente auf größeren Aufwand bei der Halterung und Lagerung der Elemente verzichtet und sogar eine Begehbarkeit der Rieseleinbau-Elemente ohne zusätzliche Maßnahmen erreicht werden kann.

Ein solchermaßen ausgestaltetes Rieseleinbau-Element zeichnet sich somit dadurch aus, daß aufgrund der in Abhängigkeit von der Flüssigkeitsfilmdicke ausgebildeten Profiltiefe t der Profilierung 3 entlang der gesamten Oberfläche der Kanäle 2 eine optimale Querverteilung und ständige Umlenkung des Flüssigkeitsfilmes gewährleistet wird, wodurch der Wärme- und/oder Stoffaustausch und somit der Wirkungsgrad erheblich verbessert werden.

### Bezugszeichenliste

- 1: Flächenelement
- 2: Kanal
- 2a: Kanalflanke
- 2b: Flächenstreifen
- 2c: Kanalabschnitt
- 2d: Kanalabschnitt
- 2e: Kanalabschnitt
- 2f: Kanalabschnitt
- 2g: Kanalabschnitt
- 3: Profilierung
- 4: Anlagefläche
- t: Profiltiefe
- b: Profilbreite

## Patentansprüche

1. Rieseleinbau-Element für Einrichtungen zum Stoff- und/oder Wärmeaustausch zwischen Gasen und Flüssigkeiten, insbesondere für Kühltürme, bestehend aus einer Mehrzahl von profilierten Flächenelementen (1), die mit Wellungen und/oder Faltungen zur Bildung von im Gegenstrom von dem jeweiligen Gas und der jeweiligen Flüssigkeit durchströmten Kanälen (2) versehen sind, welche unter einem vorgegebenen Winkel zur Hauptströmungsrichtung verlaufen, wobei der schräge Kanalverlauf über die Höhe des gesamten Rieseleinbaues mindestens zwei Richtungswechsel aufweist, die Flächenelemente (1) im Bereich des Gaseintritts mit einem parallel zur Gasströmungsrichtung verlaufenden Kanalabschnitt (2g) und im Bereich des Flüssigkeitseintritts mit einem parallel zur Flüssigkeitsströmung verlaufenden Kanalabschnitt (2c) versehen sind und jeder Kanal (2) mit einem in etwa trapezförmigen Querschnitt mit schmalen Flächenstreifen (2b) zwischen den vorzugsweise unter einem Winkel von 90° zueinander verlaufenden Kanalflanken (2a) ausgeführt ist,
**dadurch gekennzeichnet**,
daß mit Ausnahme der Kanalabschnitte (2c und 2g) im Eintrittsbereich der Flüssigkeit bzw. des Gases die gesamte Oberfläche der Kanäle (2) einschließlich der schmalen Flächenstreifen (2b) mit einer etwa quer zur Strömungsrichtung der Flüssigkeit verlaufenden Profilierung (3) versehen ist, deren Profiltiefe (t) mindestens das Zweifache der Flüssigkeitsfilmdicke beträgt.

2. Rieseleinbau-Element nach Anspruch 1, dadurch gekennzeichnet, daß die Breite (b) der einzelnen Profilabschnitte mindestens das Zehnfache der Flüssigkeitsfilmdicke beträgt.

3. Rieseleinbau-Element nach Anspruch 1 oder 2, dadurch gekennzeichnet, daß die Profilierung (3) mit scharfkantigen Übergängen ausgebildet ist.

4. Rieseleinbau-Element nach mindestens einem der Ansprüche 1 bis 3, dadurch gekennzeichnet, daß im Bereich der schmalen Flächenstreifen (2b) definierte Anlageflächen (4) zur Kontaktierung benachbarter Flächenelemente (1) ausgebildet sind.

5. Rieseleinbau-Element nach mindestens einem der Ansprüche 1 bis 4, dadurch gekennzeichnet, daß die Flächenelemente (1) aus tiefgezogenen Kunststoff-Folien mit einer Folienstärke von 0,3 bis 3mm hergestellt sind.

6. Rieseleinbau-Element nach mindestens einem der Ansprüche 1 bis 5, dadurch gekennzeichnet, daß die Kanäle (2) unter einem Winkel von 15 bis 30° zur Senkrechten bzw. zur Hauptströmungsrichtung ausgerichtet sind.
